# EUROPEAN PATENT APPLICATION

(11) **EP 1 498 967 A2**
(43) Date of publication of application: **19.01.2005**
(21) Application number: 04016257.0
(22) Date of filing: 09.07.2004
(51) Int. Cl.: H01M 8/02

(54) **Flow field pattern for fuel cell stack separator plates**

(30) Priority: 14.07.2003 CN 03275710
(71) Applicant: Asia Pacific Fuel Cell Technologies, Ltd., Chunan, Miaoli 350 (TW)
(72) Inventor: Ys Yang, Jefferson, CA 92869 (US); Pen-Mu Kao, Mike, Anaheim CA 92807 (US); Bo, Aili, Anaheim CA 92807 (US); Hsiao, Feng-Hsiang, Taipei Taiwan 110, R.O.C. (CN)
(74) Representative: Goddar, Heinz J., Dr.

(57) **Abstract**

A flow field pattern for separator plates of a fuel cell system is disclosed. The separator plate is formed with a gas inlet port at a first edge, a gas outlet port at a second edge, and a plurality of gas channels at a first surface. A first guide channel is arranged at the first edge adjacent to the gas inlet port and a second guide channel is arranged at the second edge adjacent to the gas outlet port. Each of the guide channels comprises a guide section and an outlet section. A part of the guide section of the first guide channel is located opposite to the outlet section of the second guide channel. The two ends of the gas channels in a guiding zone of the separator plate are respectively connected with the gas inlet port at the first edge and the guide section of the second guide channel at the second edge. The guide section of the second guide channel is fluid communicated with the outlet section of the second guide channel, which is connected by the gas channels in a connecting zone to the guide section of the first guide channel, and through the outlet section of the first guide channel and the gas channels in an outlet zone of the separator plate to the gas outlet port at the second edge.

## Description

### BACKGROUND OF THE INVENTION

### 1. Field of the Invention

The present invention relates generally to a fuel cell stack structure, and in particular to a flow field design for separator plates of a fuel cell stack.

### 2. Description of the Prior Art

A fuel cell is a power-generating unit that generates electrical energy through electrochemical reaction of hydrogen and oxygen. The fuel cell has the advantages of high energy conversion efficiency, clean exhaust gas, low noise, and non-use of conventional fuels, as compared with a conventional internal combustion engine. In the past few years, it has been highly promoted and developed worldwide. Among these known fuel cells, the proton exchange membrane fuel cell (PEMFC) is the best-developed technique, having the advantages of low operation temperature, fast start-up and high power density. As a whole, PEMFC has high value for industry.

In a conventional PEMFC, the fuel cell generally comprises a plurality of single cells. Each of the single cells comprises a proton exchange membrane (PEM), an anode catalyst layer coated on an anode side of the proton exchange membrane, and a cathode catalyst layer coated on a cathode side of the proton exchange membrane. The outer side of the anode catalyst layer is provided with an anode gas diffusion layer and an anode plate, while the outer side of the anode catalyst layer is provided with a cathode gas diffusion layer and a cathode plate. The whole structure is tightly fastened and forms a single cell unit.

Practically, a bipolar plate is used to replace the anode plate and the adjacent cathode plate of the adjacent single cell. The two surfaces of the bipolar plate are respectively formed with a plurality of channels for transportation of reactant gas like hydrogen and air.

Generally, a fuel cell system should be maintained at an appropriate operation temperature and humidity for optimal performance. Besides the anode gas channels and cathode gas channels, a fuel cell is usually provided with coolant channels, such that the heat generated in operation of the fuel cell is removed by the coolant flowing therethrough and the fuel cell is maintained at a proper temperature.

The conventional anode plate and the cathode plate generally comprise a plurality of gas channels arranged between a gas inlet port and a gas outlet port. To maintain a uniform distribution of gas (e.g. hydrogen or air) to each gas channel, all gas channels are same in length. Thereby, gas is evenly distributed in each gas channel and reacts with the catalyst at the catalyst layer. Such a design is critical for optimizing the operation efficiency of a fuel cell. Moreover, the flow field pattern of the separator plate is carefully designed to allow the gas to flow at a rate, such that sufficient gas is supplied to the fuel cell for generating a desired power. Hence, to achieve the requirements, most of the plates are formed with gas channels at the surface with predetermined parallel and serpentine layouts. Also, the flow field pattern of the cooling plate to enable effective cooling of the fuel cell is another critical factor that should be considered.

Although the serpentine form of gas channels arranged at the surface of the separator plate of conventional fuel cell enables that the gas channels have identical length, reactant gas is uniformly distributed in each gas channel and contact of gas with catalyst is maximal, practically, it is found that gas may be obstructed to flow by impurities and water droplets accumulated in the gas channels. As a result, the performance of the fuel cell is adversely affected.

### SUMMARY OF THE INVENTION

Thus, a primary object of the present invention is to provide a flow field pattern for separator plate of fuel cell system, such that reactant gas is uniformly distributed to each gas channel and reacts maximally with catalyst.

Another object of the present invention is to provide a separator plate with flow field pattern for fuel cell system. The separator plate is formed with guide channels at the gas inlet port and gas outlet port, that allow reactant gas to redistribute evenly to the gas channels.

A further object of the present invention is to provide a flow field pattern for separator plate that enables a smooth transportation of gas even when any gas channels are obstructed by substances. Impurities, water droplets and substances in the gas channels are blown out to the first and second guide channels, avoiding the gas channels to be blocked by those substances.

To achieve the above objects, in accordance with the present invention, there is provided a flow field pattern for separator plates used in a fuel cell system. The separator plate is formed with a gas inlet port at a first edge, a gas outlet port at a second edge, and a plurality of gas channels at a first surface. A first guide channel is arranged at the first edge adjacent to the gas inlet port and a second guide channel is arranged at the second edge adjacent to the gas outlet port. Each of the guide channels comprises a guide section and an outlet section. The guide section of the first guide channel is located opposite to the outlet section of the second guide channel. The two ends of the gas channels in a guiding zone of the separator plate are respectively connected with the gas inlet port at the first edge and the guide section of the second guide channel at the second edge. The guide section of the second guide channel is fluid communicated with the outlet section of the second guide channel which is connected by the gas channels in a connecting zone to the guide section of the first guide channel, and through the outlet section of the first guide channel and the gas channels in an outlet zone of the separator plate to the gas outlet port at the second edge.

In an embodiment of the present invention, a part of the guide section of the first guide channel is located opposite to the outlet section of the second guide channel. The flow field design of the present invention may be applied to anode plate and cathode plate of the fuel cell stack.

### BRIEF DESCRIPTION OF THE DRAWINGS

The present invention will be apparent to those skilled in the art by reading the following description of preferred embodiments thereof, with reference to the attached drawings, in which:

**Fig. 1** is a perspective view of a fuel cell system with flow field pattern constructed in accordance with the present invention;

**Fig. 2** is an exploded view of the fuel cell system of **Fig. 1;**

**Fig. 3** is a cross-sectional view showing the components of the fuel cell stack in exploded status;

**Fig. 4** is a cross-sectional view showing the components of the fuel cell stack in assembled status;

**Fig. 5** is an enlarged view of the encircled portion **A** of **Fig. 4;**

**Fig. 6** is a plan view showing a flow field pattern of a cathode plate;

**Fig. 7** is an enlarged plan view of the encircled portion **B** of **Fig. 6;**

**Fig. 8** is an enlarged perspective view of the encircled portion **B** of **Fig. 6**;

**Fig. 9** is a sectional view taken along line **9-9** of **Fig. 6**;

**Fig. 10** is a plan view showing a plurality of coolant channels at a bottom surface of the cathode plate;

**Fig 11** is a sectional view taken along line **11-11** of **Fig. 10**;

**Fig. 12** is an enlarged plan view of the encircled portion **C** of **Fig. 10**;

**Fig. 13** is plan view showing the flow field pattern of an anode plate;

**Fig. 14** is a sectional view taken along line **14-14** of **Fig. 13**;

**Fig. 15** is a plan view showing a plurality of coolant channels at a top surface of the anode plate; and

**Fig. 16** is a sectional view taken along line **16-16** of **Fig. 15.**

### DETAILED DESCRIPTION OF THE PREFERRED EMBODIMENTS

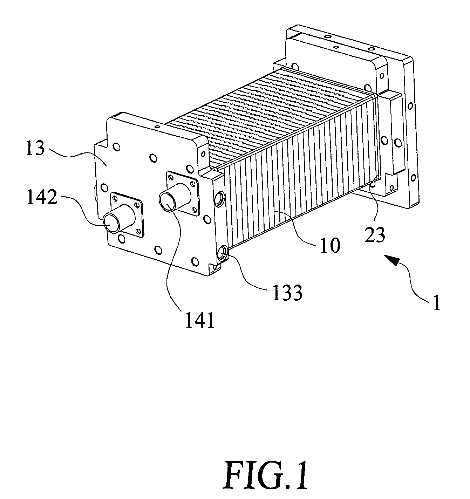

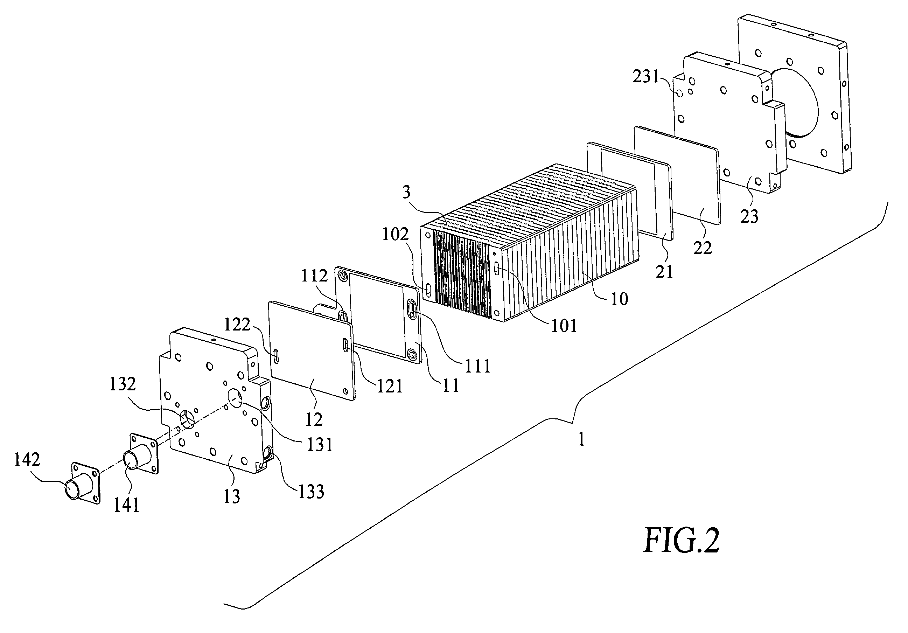

With reference to the drawings and in particular to **Figs. 1** and **2**, **Fig. 1** is a perspective view of a fuel cell system with flow field pattern constructed in accordance with the present invention and **Fig. 2** is an exploded view of the fuel cell system of **Fig. 1.**

As shown, the fuel cell system **1** comprises a fuel cell stack **10**. The fuel cell stack **10** is provided with an anode collector **11**, an anode insulator **12** and an anode endplate **13** at an anode side of the fuel cell stack **10**, and a cathode collector **21**, a cathode insulator **22** and a cathode endplate **23** at a cathode side of the fuel cell stack **10**.

The anode endplate **13** is formed with a cathode gas inlet **131** and a cathode gas outlet **132**. Cathode gas (air) is conveyed to the cathode gas inlet **131** of the anode endplate **13**, through a cathode gas inlet **121** of the anode insulator **12** and a cathode gas inlet **111** of the anode collector **11** to a cathode gas inlet **101** of the fuel cell stack **10** in sequence. The cathode gas proceeds electrochemical reaction in the fuel cell stack **10** and then flows out from a cathode gas outlet **102** of the fuel cell stack **10**. Then, the cathode gas is conveyed through a cathode gas outlet **112** of the anode collector **11** and a cathode gas outlet **122** of the anode insulator **12** to a cathode gas outlet **132** of the anode endplate **13** in sequence. The cathode gas inlet **131** and cathode gas outlet **132** of the anode endplate **13** may be further respectively connected with a cathode gas inlet connector **141** and a cathode gas outlet connector **142**.

Similarly, the cathode endplate **23** is formed with an anode gas inlet **231**. Anode gas is conveyed from the anode gas inlet **231** to the fuel cell stack **10** for proceeding electrochemical reaction. Then, the anode gas flows out from an anode gas outlet **133** of the anode endplate **13**.

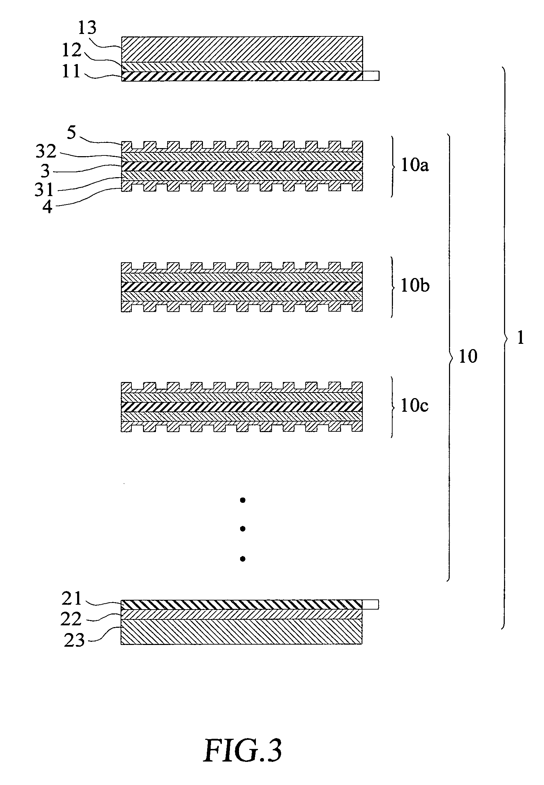

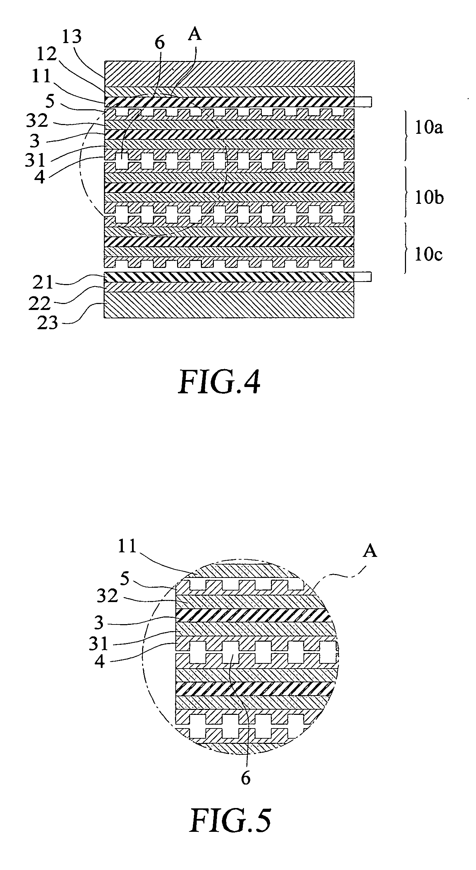

Please refer to **Figs. 3** and **4**. **Fig. 3** is a cross-sectional view showing the components of the fuel cell system **1**. **Fig. 4** shows the components of the fuel cell system **1** of **Fig. 3** in assembled status. The fuel cell system **1** comprises a fuel cell stack **10** which includes a plurality of single cell units **10a**, **10b, 10c**, and so on. Each of the single cells includes a membrane electrode assembly (MEA) **3** which comprises a proton exchange membrane, an anode catalyst layer coated on an anode side of the proton exchange membrane, and a cathode catalyst layer coated on a cathode side of the proton exchange membrane. On a cathode side of the membrane electrode assembly **3**, there is arranged a cathode gas diffusion layer **31** and a cathode plate **4** serving as a separator plate, while on an anode side of the membrane electrode assembly **3**, there is arranged an anode gas diffusion layer **32** and an anode plate **5** serving as a separator plate.

A plurality of coolant channels **6** are formed between adjacent single cell units for cooling air flowing therethrough, whereby the fuel cell stack **10** is properly cooled. As shown in **Fig. 5** which is an enlarged view of the encircled portion **A** of **Fig. 4,** the cathode plate **4** of the single cell unit **10a** and the anode plate **5** of the single cell unit **10b** are respectively formed with a corrugated structure defining a plurality of channels thereon. The top surface of the cathode plate **4** is used as a cathode flow field plate for the fuel cell stack **10** and the bottom surface of the cathode plate 4 is used as a coolant plate for the fuel cell stack **10**. The top surface of the anode plate **5** is used as a coolant plate for the fuel cell stack **10** and the bottom surface of the cathode plate **4** is used as an anode plate for the fuel cell stack **10.** When the cathode plate **4** of the single cell unit **10a** is stacked precisely on the anode plate **5** of the single cell unit **10b,** the channels of the cathode plate **4** is located oppositely and correspondingly to the channels of the anode plate **5**, and form a plurality of coolant channels **6** therebetween.

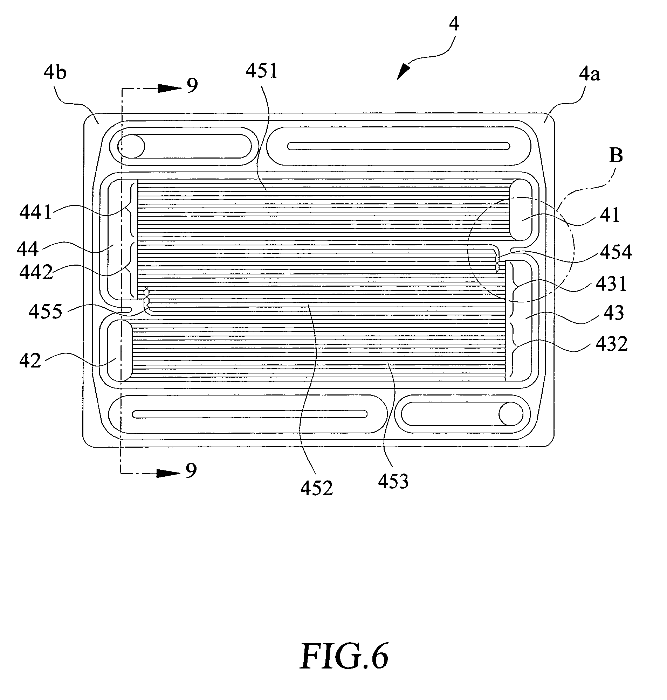

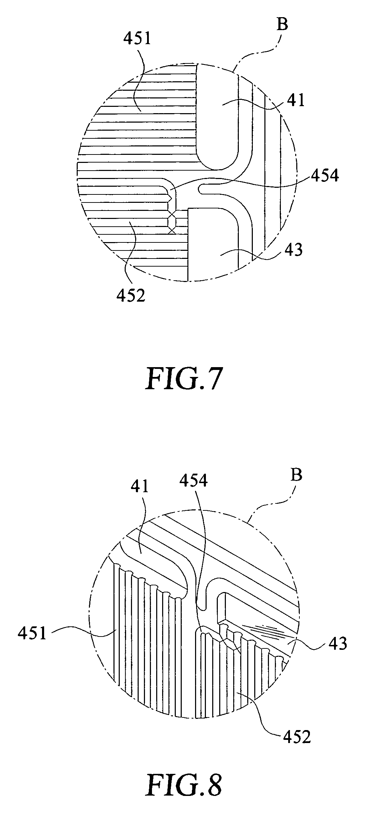

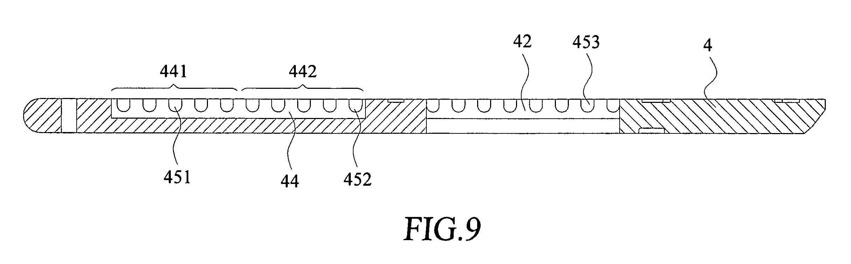

**Fig. 6** is a plan view showing a flow field pattern at a top surface of the cathode plate **4.** The cathode plate **4** has a first edge **4a** and a second edge **4b** opposite to the first edge **4a.** A gas inlet **41** in the form of an elongated slot having rounded ends is defined at the first edge **4a** of the cathode plate **4,** and a gas outlet **42,** also in the form of an elongate slot with rounded ends, is defined at the second edge **4b** of the cathode plate **4**. Please also refer to **Figs. 7** to **9**. **Fig. 7** is an enlarged plan view of the encircled portion **B** of **Fig. 6** and **Fig. 8** is an enlarged perspective view of the encircled portion **B**. **Fig. 9** is a sectional view taken along line **9-9** of **Fig. 6**.

As shown, the cathode plate **4** is formed with a first guide channel **43** at the first edge **4a** adjacent to the gas inlet **41**. The first guide channel **43** comprises a guide section **431** and an outlet section **432**. Moreover, a second guide channel **44** is formed at the second edge **4b** of the cathode plate **4** adjacent to the gas outlet **42**. Similarly, the guide channel **44** comprises a guide section **441** and an outlet section **442**.

The cathode plate **4** is formed with a plurality of gas channels in a central portion. The gas channels are located at three different zones, a guide zone **451**, a connecting zone **452** and an outlet zone **453**. Two ends of the gas channels in the guiding zone **451** of the cathode plate **4** are respectively connected with the gas inlet port **41** at the first edge **4a** and the guide section **441** of the second guide channel **44** at the second edge **4b.** The guide section **441** is fluid communicated with the outlet section **442** of the second guide channel **44**, which is then connected by the gas channels in the connecting zone to the guide section **431** of the first guide channel **43**, and through the outlet section **432** of the first guide channel **43** and the gas channels in the outlet zone **453** of the cathode plate **4** to the gas outlet port **42** at the second edge **4b.**

The gas inlet **41** at the first edge **4a** is located opposite to the guide section **441** of the second guide channel **44** at the second edge **4b.** The outlet section **432** of the guide channel **43** at the first edge **4a** is located opposite to the gas outlet **42** at the second edge **4b.** The guide section **431** of the first guide channel **43** at the first edge **4a** is located opposite to the outlet section **442** of the second guide channel **44** at the second edge **4b**.

In a preferred embodiment of the present invention, only a part of the guide section **431** of the first guide channel **43** at the first edge **4a** is located opposite to the outlet section **442** of the second guide channel **44** at the second edge **4b**. The guide section **431** of the guide channel **43** is connected to the outlet section **442** of the second guide channel by the straight gas channels which are spaced from each other and parallely arranged therebetween. As shown in Figs **7** and **8**, for the other part of the guide section **431** of the first guide channel **43**, which is not located opposite to the outlet section **442** of the second guide channel **44**, there is provided with a connecting channel **454** which is substantially perpendicular to the gas channels in the connecting zone **452** for connecting the gas channels in the connecting zone **452** to the first guide channel **43**. Similarly, a connecting channel **455** is provided at the outlet section **442** of the second guide channel **44** which is substantially perpendicular to the gas channels in the connecting zone **452** for connecting the outlet section **442** to the gas channels in the connecting zone **452**.

The guide channels **43**, **44** enable the reactant gas from the gas channels of one zone, e.g. the guiding zone **451** or the connecting zone **452**, to gather and redistribute uniformly to the gas channels of the next zone, e.g. the connecting zone **452** or the outlet zone **453**. When the cathode gas flows in from the gas inlet port **41** to the guide zone **451**, through the connecting zone **452** and outlet zone **453** to the gas outlet port **42**, the cathode gas is redistributed and guided by the first guide channel **43** and the second guide channel **44**. Therefore, in the case that any one or more of the gas channels in the guide zone **451** or the connecting zone **452** is obstructed by dust, water droplets or any substances, after passing the guide channel **44**, the cathode gas is evenly redistributed to the gas channels in the next zone, i.e. the connecting zone **451** or the outlet zone **453**, such that cathode gas flows smoothly through the flow field pattern. On the contrary, in the conventional design, when any part of a gas channel is blocked, the whole gas channel is not longer available for transportation of gas.

The gas channels with serpentine layouts as the prior art are susceptible to be blocked by impurities or water droplets. However, it is noted that the arrangement of the first and second guide channels **43**, **44** between the gas inlet **41** and gas outlet **42** settles the problem by serves as an intermediate cleaning station. Hence, the impurities, water droplets or any substances in the gas channels are blown out by the gas to the first or second guide channels **43**, **44**. Undoubtedly, the present invention is practical to improve the transportation of gas.

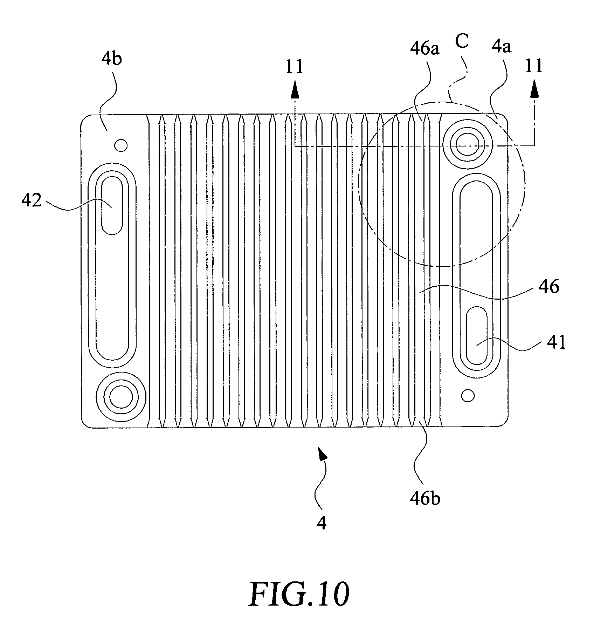

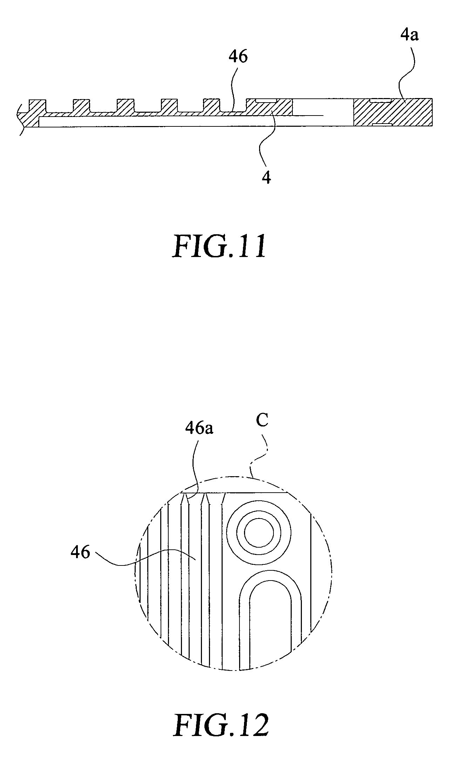

Please refer to **Fig. 10**, which is a plan view showing a plurality of coolant channels **46** at the cathode plate **4**. **Fig. 11** is a sectional view taken along line **11-11** of **Fig. 10**. As shown, a plurality of coolant channels **46** are formed on the bottom surface of the cathode plate **4** for flowing of cooling air therethrough. The coolant channels **46** are parallely arranged and spaced from each other. Each coolant channel **46** extends from one edge (the top edge) of the cathode plate **4** to the opposite edge (the bottom edge), comprising a cooling air inlet **46a** at one end at the top edge and a cooling air outlet **46b** at the other end at the bottom edge.

**Fig. 12** is an enlarged plan view of the encircled portion **C** of **Fig. 10.** In order to generate a good cooling air flow, each cooling air inlet **46a** and cooling air outlet **46b** are formed with a funnel shape enlarged structure.

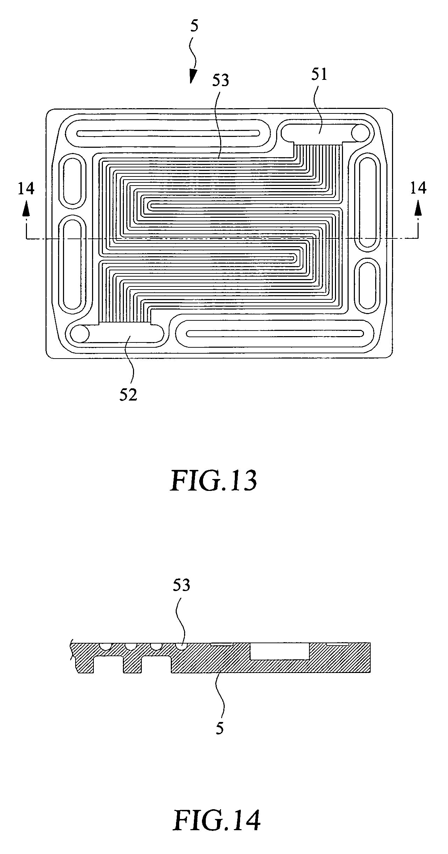

**Fig. 13** is a plan view showing the flow field pattern at the top surface of an anode plate **5**. One edge of the anode plate **5** is formed with an anode gas inlet **51**, and the opposing edge of the anode plate **5** is formed with an anode gas outlet **52**. **Fig. 14** shows a sectional view taken along line **14-14** of **Fig. 13**. The anode gas inlet **51** is connected to the anode gas outlet **52** by a plurality of anode gas channels **53**. Each of the anode gas channels **53** is provided with bends, each of which redirects the anode gas channel **53** in a direction substantially normal to the anode gas channel **53** in the previous section. Finally, the anode gas flows out from the anode gas outlet **52**.

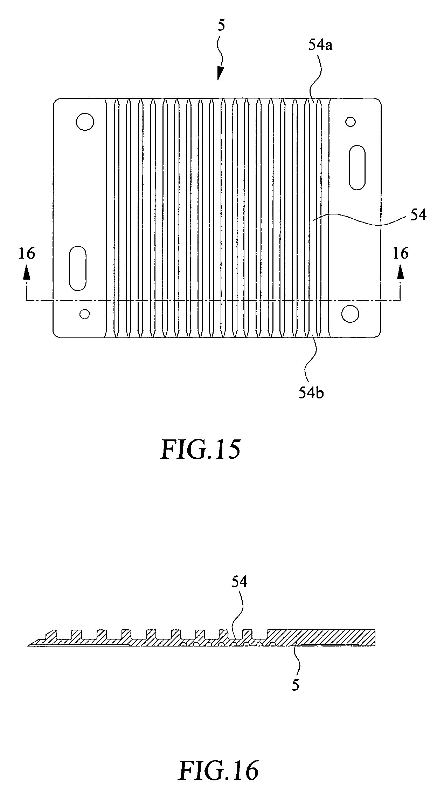

Please refer to **Fig. 15**. **Fig. 1**5 is a plan view showing a plurality of coolant channels formed on the anode plate **5**. **Fig. 16** is a sectional view taken along line **16-16** of **Fig. 15**. As shown, a plurality of coolant channels **54** are formed on a top surface of the anode plate **5** for flowing of cooling air therethrough. The coolant channels **54** are parallely arranged and spaced from each other. Each coolant channel **54** extends from one edge (the top edge) of the anode plate **5** to the opposite edge (the bottom edge), comprising a cooling air inlet **54a** at one end at the top edge and a cooling air outlet **54b** at the other end at the bottom edge. Similar to the coolant channels **46** of the cathode plate **4**, each cooling air inlet **54a** and cooling air outlet **54b** of the coolant channels **54** are formed with a funnel shape enlarged structure so as to generate a good cooling air flow.

From the above-described preferred embodiment, it is apparent that the flow field design of the present invention allows uniform distribution of reactant gases to each gas channel, such that reactant gases are able to react maximally with the catalyst at the respective catalyst layer. Undoubtedly, the flow field designs can significantly promote the performance of a fuel cell system. The present invention is novel and practical in use.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A fuel cell stack comprising at least one separator plate having a first surface and a second surface, a gas inlet port being formed at a first edge of the separator plate and a gas outlet port being formed at a second edge of the separator plate, the separator plate comprising:
a first guide channel formed at the first edge adjacent to the gas inlet port, comprising a guide section and an outlet section;
a second guide channel formed at the second edge adjacent to the gas outlet port, comprising a guide section and an outlet section;
a plurality of gas channels formed at the first surface of the separator plate, comprising a guide zone, a connecting zone, and an outlet zone;
wherein the gas inlet port at the first edge is fluid communicated with the guide section of the second guide channel through the guide zone of the gas channels, the outlet section of the second guide channel is fluid communicated with the guide section of the first guide channel through the connecting zone of the gas channels, and the outlet section of the first guide channel is fluid communicated with the gas outlet port through the outlet zone at the second edge.

2. The separator plate as claimed in Claim 1, wherein the gas inlet port at the first edge is located opposite to the guide section of the second guide channel at the second edge, and the outlet section of the first guide channel at the first edge is located opposite to the gas outlet port at the second edge, and the guide section of the first guide channel at the first edge is located opposite to the outlet section of the second channel at the second edge.

3. The separator plate as claimed in Claim 1, wherein a part of the guide section of the first guide channel at the first edge is located opposite to the outlet section of the second guide channel.

4. The separator plate as claimed in Claim 3, wherein a part of the guide section of the first guide channel is connected with the outlet section of the second guide channel by a plurality of gas channels which are parallely arranged and spaced from each other, and the other part of the guide section, that is not located opposite to the outlet section of the second guide channel, is provided with a connecting channel which is substantially perpendicular to the gas channels for connecting to the gas channels.

5. The separator plate as claimed in Claim 1, wherein the separator plate is a cathode plate.

6. The separator plate as claimed in Claim 1, wherein the first surface of the separator plate is used as a cathode flow field plate and the second surface is used as a coolant plate.

7. The separator plate as claimed in Claim 6, wherein the coolant plate is formed with a plurality of coolant channels which are parallely arranged and spaced from each other, extending from one edge of the coolant plate to the other edge, such that a cooling air flows in from one end of each coolant channel and flows out from the other end.

8. The separator plate as claimed in Claim 7, wherein each coolant channel is respectively formed with a funnel shape enlarged structure at its two ends.

9. The separator plate as claimed in Claim 1, wherein the separator plate is an anode plate.

10. The separator plate as claimed in Claim 1, wherein the first surface of the separator plate is used as an anode flow field plate and the second surface is used as a coolant plate.

11. The separator plate as claimed in Claim 10, wherein the coolant plate is formed with a plurality of coolant channels which are parallely arranged and spaced from each other, extending from one edge of the coolant plate to the other edge, such that a cooling air flows in from one end of each coolant channel and flows out from the other end.

12. The separator plate as claimed in Claim 11, wherein each coolant channel is respectively formed with a funnel shape enlarged structure at its two ends.
